# EUROPÄISCHE PATENTSCHRIFT

(11) **EP 2 160 741 B1**
(45) Veröffentlichungstag und Bekanntmachung des Hinweises auf die Patenterteilung: **17.08.2011**
(21) Anmeldenummer: 08773492.7
(22) Anmeldetag: 18.06.2008
(51) Int. Cl.: H01F 1/375, H01F 1/44, F16F 1/36

(54) **MAGNETORHEOLOGISCHE KOMPOSITMATERIALIEN MIT HARTMAGNETISCHEN PARTIKELN, VERFAHREN ZU DEREN HERSTELLUNG SOWIE DEREN VERWENDUNG**
MAGNETORHEOLOGICAL COMPOSITE MATERIALS COMPRISING HARD MAGNETIC PARTICLES, METHOD FOR THE PRODUCTION THEREOF AND USE THEREOF
MATÉRIAUX COMPOSITES MAGNÉTORHÉOLOGIQUES AVEC PARTICULES MAGNÉTIQUES DURES, LEUR PROCÉDÉ DE FABRICATION ET LEUR UTILISATION

(30) Priorität: 21.06.2007 DE 102007028663
(43) Veröffentlichungstag der Anmeldung: 10.03.2010
(73) Patentinhaber: Fraunhofer-Gesellschaft zur Förderung der angewandten Forschung e.V., 80686 München (DE)
(72) Erfinder: BÖSE, Holger, 97080 Würzburg (DE); HESLER, Andreas, 97082 Würzburg (DE); MONKMAN, Gareth, 93053 Regensburg (DE)
(74) Vertreter: Pfenning, Meinig & Partner GbR
(86) Internationale Anmeldenummer: PCT/EP2008/004902
(87) Internationale Veröffentlichungsnummer: WO 2008/155109

(56) Entgegenhaltungen:
- WO-A-2006/024457
- WO-A-2007/118639
- WO-A-2008/024744
- VON LOCKETTE P R ET AL: "Particle mixtures in magnetorheological elastomers (MREs)" PROCEEDINGS OF SPIE - THE INTERNATIONAL SOCIETY FOR OPTICAL ENGINEERING - SMART STRUCTURES AND MATERIALS 2006 - ACTIVE MATERIALS: BEHAVIOR AND MECHANICS 2006 SPIE US, Bd. 6170, 2006, Seiten 61700T-1-61700T-13, XP002493893 NY, US
- FLORIAN ZSCHUNKE: "Aktoren auf Basis des magnetorheologischen Effekts" INTERNET CITATION, [Online] 20. Juni 2005 (2005-06-20), - 22. September 2005 (2005-09-22) XP002400347 Universität Erlangen-Nürnberg, DE Gefunden im Internet: URL:http://deposit.ddb.de/cgi-bin/dokserv? idn=976717409&dok_var=d1&dok_ext=pdf&filen ame=976717409.pdf#search=%22Magnetorheolog ische%20Elastomermatrix%22> [gefunden am 2006-09-25]

## Beschreibung

Die vorliegende Erfindung betrifft Komposite aus einem elastischen und/oder thermoplastisch-elastischen Trägermedium und hartmagnetischen Partikeln, die in einem Magnetfeld polarisiert werden, wobei nach dem Abschalten des Magnetfeldes eine Magnetisierung zurückbleibt.

Magnetisch steuerbare Elastomerkomposite, sog. magnetorheologische Elastomere (MRE), sind in allgemeiner Form bereits bekannt. Sehr viel weiter verbreitet sind magnetorheologische Flüssigkeiten (MRF), bei denen die magnetisierbaren Partikel in einer Trägerflüssigkeit verteilt sind. Wegen der fehlenden chemischen Vernetzung haben solche Materialien jedoch keine feste Form, sondern sind flüssig oder als Gele irreversibel verformbar.

Ebenfalls bekannt ist die Möglichkeit, in einem MRE während der Vernetzung durch Anlegen eines Magnetfeldes eine kettenförmige Anordnung der Partikel zu erzeugen. Hierfür wurden bislang überwiegend Silicone verwendet, die als gießfähige Vorstufen eingesetzt wurden. Daneben wurde der Einsatz von anderen technisch weit verbreiteten Elastomeren aus Natur- und Synthesekautschuk, wie z.B. Nitrilkautschuk, beschrieben. Auch die Verwendung verschiedener magnetischer Partikelmaterialien in MRE wurde in allgemeiner Form bereits erwähnt.

Den bereits bekannten Systemen ist dabei gemein, dass stets weichmagnetische Partikel eingesetzt werden. Somit sind lediglich Materialien bekannt, deren permanente Beeinflussung der mechanischen Eigenschaften die andauernde Präsenz eines äußeren Magnetfeldes erfordert. Dies ist entweder apparativ aufwändig, da beispielsweise ein zusätzlicher Permanentmagnet in der jeweiligen Vorrichtung eingesetzt werden muss.

Aufgabe der vorliegenden Erfindung ist es somit, magnetorheologische Komposite bereitzustellen, bei denen eine permanente mechanische Verstärkung der Kompositmatrix durch die magnetischen Materialien ermöglicht ist.

Diese Aufgabe wird bezüglich der Kompositmaterialien mit den Merkmalen des Anspruchs 1 und bezüglich der Aufgabe zur Herstellung der Materialien mit den Merkmalen des Anspruchs 10 gelöst. Die abhängigen Ansprüche stellen dabei jeweils bevorzugte Ausfürungsformen dar. Mit dem Anspruch 15 werden Verwendungszwecke der Materialien genannt.

Erfindungsgemäß werden somit magnetorheologische Materialien aus mindestens einem nicht-magnetisierbaren elastomeren und/oder thermoplastisch-elastischen Trägermedium und darin enthalten mindestens eine erste Sorte magnetisierbarer Partikel aus mindestens einem hartmagnetischen Werkstoff und mindestens eine weitere Sorte magnetisier barer Partikel aus mindestens einem weichmagnetischem Werkstoff.
Erfindungsgemäß werden unter hartmagnetischen Werkstoffen solche Werkstoffe verstanden, wie sie in der Norm DIN IEC 60405-8-1 definiert sind. Durch die erfindungsgemäßen Kompositmaterialien wird somit beispielsweise eine Ausführungsform ermöglicht, bei der die Grundsteifigkeit des Komposits durch die Magnetisierung der hartmagnetischen Partikel bleibend erhöht werden kann. Die Magnetisierung der hartmagnetischen Partikel erfolgt beispielsweise durch ein kurzzeitig angelegtes starkes Magnetfeld eines Elektromagneten. Dies bringt den Vorteil mit sich, dass im Gegensatz zu einem magnetorheologischen Elastomerkomposit mit weichmagnetischen Partikeln das Magnetfeld nicht aufrechterhalten werden muss, um die Grundsteifigkeit des Elastomerkomposits beizubehalten. Durch den nur kurzzeitig notwendigen Magnetisierungsstrom in der das Feld erzeugenden Spule wird die erforderliche Energiezuführung drastisch reduziert. Andererseits lassen sich durch ein anschließend kurzzeitig angelegtes Magnetfeld veränderter Feldstärke und/oder Feldrichtung die hartmagnetischen Partikel bleibend ummagnetisieren, wodurch eine veränderte bleibende Grundsteifigkeit des Elastomerkomposits erhalten wird. Auf diese Weise können die mechanischen Eigenschaften des Elastomerkomposits wie E-Modul und Schubmodul durch kurzzeitig angelegte Magnetfelder zwischen verschiedenen Stufen geschaltet werden. Die weichste Stufe des Elastomerkomposits entsteht durch eine Entmagnetisierung der hartmagnetischen Partikel. Durch die elastomeren und/oder thermoplastisch elastomeren Trägermedien grenzen sich die erfindungsgemäßen Kompositmaterialien von kunststoffgebundenen Magneten ab.

Vorteilhaft ist dabei, wenn die Remanenz Bᵣ (gemessen nach DIN IEC 60404-5) der dabei eingesetzten hartmagnetischen Werkstoffe mindestens 50 mT, bevorzugt mindestens 150 mT, besonders bevorzugt mindestens 350 mT beträgt. Somit ist gewährleistet, dass die eingesetzten Materialien eine hohe Magnetisierbarkeit aufweisen. Die angegebenen Werte beziehen sich dabei auf die Bestimmung nach DIN IEC 60404-5 an Werkstoffen selbst, aus denen dann die benötigten Partikel oder Pulver hergestellt werden.

Insbesondere sind die hartmagnetischen Werkstoffe dabei ausgewählt aus der Gruppe bestehend aus Legierungen basierend auf Al-Ni-Co, Al-Ni-Co-Fe-Ti, Cr-Fe-Co, Fe-Co-V-Cr, Pt-Co, Cu-Ni-Fe, Seltenerdverbindungen wie RE-Co, RE-Fe-B, RE-Fe-N, wobei RE = Sm, Ce, Pr, Nd und/oder Dy ist, z.B. Nd-Fe-B, Nd-Pr-Fe-Co-Ti-Zr-B, Pr-Fe-Co-Nd-B, Sm-Fe-N; Hartferriten, bevorzugt gemäß der Formel M¹O·n Fe₂O₃, wobei M¹ = Ba, Sr und/oder Pb und bevorzugt 4,5 ≤ n ≤ 6,5 sowie Mischungen und/oder Legierungen hieraus. Die angegebene Schreibweise ("-") umfasst jeweils immer alle möglichen Zusammensetzungen für die einzelnen Elemente. Bei den genannten Legierungen sind durch die Formulierung "basierend auf" auch Varianten umfasst, bei denen nicht alle der genannten Elemente enthalten sind, d.h. für einzelne Elemente ist auch der stöchiometrische Faktor 0 möglich.

Die erwähnten Legierungen sind dabei so zu verstehen, dass der Gehalt an den jeweiligen Elementen gemäß den gewünschten einzustellenden Eigenschaften des Werkstoffs variiert werden kann. Diese Maßnahme ist dem Fachmann beispielsweise aus der DIN-Norm IEC 60404-8-1 bekannt, deren gesamter Offenbarungsgehalt zu den genannten Legierungen hiermit durch Bezugnahme aufgenommen wird. Ebenso sind die genannten Legierungen nicht auf die explizit angegebenen Bestandteile beschränkt, sondern sie können auch weitere Elemente, z.B. Cu, Ti, Ni, Si, Fe, Mo, Al, V, Zr, Hf, Ga enthalten. Solche Legierungen sind ebenso in der DIN IEC 60404-8-1 bekannt und werden durch Bezugnahme mit aufgenommen.

Bevorzugte Seltenerdverbindungen sind dabei ausgewählt aus der Gruppe bestehend aus Nd-Fe-B, Nd-Pr-Fe-Co-Ti-Zr-B, Pr-Fe-Co-Nd-B, Sm-Co und/oder deren Legierungen.

Dabei kann es wünschenswert sein, wenn hartmagnetische Partikel die einzige Sorte magnetischer Partikel darstellen, die in den Kompositmaterialien enthalten sind.

Die Erfindung betrifft Komposite aus einem elastischen Trägermedium und einer Mischung aus hartmagnetischen und weichmagnetischen Partikeln. In diesem Fall wird beim Anlegen eines starken Magnetfeldes durch die hartmagnetischen Partikel eine bleibende Magnetisierung erzeugt, während die Magnetisierung durch die weichmagnetischen Partikel beim Abschalten des Magnetfeldes verschwindet. Auf diese Weise entsteht ein Werkstoff, dessen mechanische Eigenschaften - ähnlich wie bei den bisher bekannten magnetorheologischen Elastomeren mit ausschließlich weichmagnetischen Partikeln - durch ein relativ schwaches Magnetfeld, welches die Magnetisierung der hartmagnetischen Partikel nicht beeinflusst, reversibel verändert werden können. Abhängig von der Richtung dieses relativ schwachen Magnetfeldes in Bezug auf die Vormagnetisierung der hartmagnetischen Partikel lässt sich die aus beiden Partikelarten resultierende Gesamtmagnetisierung gegenüber der Vormagnetisierung entweder verstärken oder abschwächen. Als Auswirkung davon werden die mechanischen Eigenschaften solcher Elastomerkomposite, wie E-Modul und Schubmodul, reversibel vergrößert bzw. verkleinert. Wird dagegen ein starkes Magnetfeld angelegt, welches die Magnetisierung der hartmagnetischen Partikel verändert, so wird damit auch eine bleibende Veränderung der Magnetisierung des Werkstoffs erreicht.

Bevorzugt sind die weichmagnetischen Partikel dabei aus weichmagnetischen, metallischen Werkstoffen gebildet, insbesondere aus Eisen, Cobalt, Nickel (auch in nichtreiner Form) und Legierungen daraus wie Eisen-Cobalt, Eisen-Nickel; magnetischer Stahl; Eisen-Silizium und/oder deren Mischungen.

Alternativ dazu ist es jedoch ebenso möglich, dass die weichmagnetischen Partikel aus weichmagnetischen oxidkeramischen Werkstoffen gebildet sind, insbesondere aus kubischen Ferriten, Perowskiten und Granaten der allgemeinen Formel

M²O · Fe₂O₃

mit einem oder mehreren Metallen aus der Gruppe M² = Mn, Fe, Co, Ni, Cu, Zn, Ti, Cd oder Mg und/oder deren Mischungen.

Eine weitere bevorzugte Ausführungsform sieht vor, dass die werkmagnetischen Partikel aus Mischferriten, wie Mn-Zn-, Ni-Zn-, Ni-Co-, Ni-Cu-Co-, Ni-Mg-, Cu-Mg-Ferriten und/oder deren Mischungen gebildet sind.

Ebenso ist es jedoch möglich, dass die weichmagnetischen Materialien aus Eisencarbid oder Eisennitrid sowie aus Legierungen von Vanadium, Wolfram, Kupfer und Mangan und/oder deren Mischungen gebildet sind.

Die erfindungsgemäß eingesetzten weichmagnetischen Partikel können dabei in reiner Form, verunreinigter Form und/oder als Mischungen vorliegen.

Bevorzugt liegt dabei die mittlere Teilchengröße der ersten Sorte magnetisierbarer Partikel und/oder der mindestens einen weiteren Sorte magnetisierbarer Partikel zwischen 5 nm und 10 mm, bevorzugt zwischen 10 nm und 1 mm. Das Mischungsverhältnis der beiden Sorten magnetisierbarer Partikel ist in einem breiten Bereich variierbar und kann auf den jeweiligen speziellen Verwendungszweck abgestimmt werden. So beträgt das Volumenverhältnis der ersten Sorte magnetisierbarer Partikel und der mindestens einen weiteren Sorte magnetisierbarer Partikel zueinander zwischen 1:99 und 99:1, bevorzugt zwischen 10:90 und 90:10.

Die Gesamtheit der magnetisierbaren Partikel, d.h. erste sowie weitere Sorte, bezogen auf 100 Vol-% des magnetorheologischen Materials, liegt dabei vorteilhaft zwischen 1 und 70 Vol.-%, bevorzugt zwischen 10 und 50 Vol.-%.

Insbesondere erweist es sich als vorteilhaft, wenn die erste Sorte magnetisierbarer Partikel und/oder die mindestens eine weitere Sorte magnetisierbarer Partikel als Mischungen von Partikeln mit verschiedener Partikelgröße vorliegen. Besonders bevorzugt ist dabei, wenn die Mischung eine bi- oder trimodale Partikelgrößenverteilung ist. Dabei kann die erste Sorte magnetisierbarer Partikel und/oder die mindestens eine weitere Sorte magnetisierbarer Partikel sowohl anisotrop als auch isotrop im Trägermedium verteilt sein. Eine beispielhafte anisotrope Verteilung sieht vor, dass die magnetisierbaren Partikel kettenförmig verteilt sind. Dies kann beispielsweise dadurch erfolgen, dass beim formgebenden Prozess (dies ist beispielsweise Vernetzung bei elastomeren Materialien oder Abkühlung eines thermoplastisch-elastomeren Materials) ein externes Magnetfeld angelegt wird. Dabei verteilen sich die magnetischen Partikel entlang der Feldlinien. Durch die Stärke des während der Vernetzung herrschenden Magnetfeldes lässt sich die eingeprägte Mikrostruktur beeinflussen.

Die Grundsteifigkeit des Elastomerkomposits ohne Magnetfeld kann durch das gewählte Elastomermaterial (Polymerzusammensetzung, Kettenlänge, etc.) sowie die magnetischen Partikel beeinflusst werden. Der Einfluss der magnetischen Partikel auf die Grundsteifigkeit des Elastomerkomposits hängt von der Volumenkonzentration, aber auch von der Art der Partikel, der Partikelgrößenverteilung und der Partikelform ab. Eine weitere Einflussmöglichkeit ergibt sich außerdem durch die Verwendung von Weichmachern, wie beispielsweise schwerflüchtigen Ölen. Dies eröffnet die Möglichkeit der Herstellung von extrem weichen Elastomerkompositen, wodurch höhere Steigerungsfaktoren der mechanischen Eigenschaften erreicht werden können. Diese Zusammenhänge sind bereits bekannt. Neu ist die Möglichkeit, durch den Einsatz von hartmagnetischen Partikeln im Komposit eine durch ein ausreichend starkes Magnetfeld veränderbare und nach dem Abschalten des Magnetfeldes bleibende Magnetisierung und damit veränderbare mechanische Eigenschaften des Kompositmaterials zu erzeugen.

Das Trägermedium zeichnet sich dabei bevorzugt durch einen Schubmodul < 500 kPa, bevorzugt < 250 kPa, besonders bevorzugt < 100 kPa gemessen bei 10 Hz und einer Deformation von 1 %, sowie durch eine Shorehärte A < 20, bevorzugt < 10 aus. Ebenso ist es bevorzugt, wenn das Trägermedium einen E-Modul < 1500 kPa, bevorzugt < 750 kPa, besonders bevorzugt < 300 kPa aufweist.

Als bevorzugte Materialien für das Trägermedium kommen insbesondere gießfähige Elastomermaterialien, wie Silikone, Polyurethane und/oder Styrol-Block-Copolymere, z.B. Styrol-Olefin-Block-Copolymere, insbesondere Styrol-Ethylen-Butylen-Block-Copolymere, Styrol-Ethylen-Propylen-Block-Copolymere und/oder Polynorbornenen in Frage.

Die rheologischen Eigenschaften bzw. weitere mechanische Eigenschaften des Trägermaterials können insbesondere durch Zugabe von Additiven, wie beispielsweise Dispergiermittel, Antioxidantien, Entschäumer und/oder Antiverschleißmittel positiv beeinflusst werden.

Ebenso ist die Zugabe von weiteren Additiven, z.B. anorganischen Partikeln, wie SiO₂, TiO₂, Eisenoxiden, Schichtsilicaten oder organischen Zusatzstoffen sowie Kombinationen daraus, möglich.

Weiterhin können ebenso Additive, wie beispielsweise Additive zur Herabsetzung von Abrasionserscheinungen, partikelförmige Zusätze wie Graphit, Perfluorethylen oder Molybdänverbindungen wie Molybdändisulfit sowie Kombinationen daraus enthalten sein.

Als Alternative hierzu sind jedoch ebenso Additive zum Einsatz für die Oberflächenbehandlung von Werkstücken, abrasiv wirkende und/oder chemisch ätzende Zusatzstoffe, wie z.B. Korund, Ceroxide, Siliziumcarbid und/oder Diamant möglich.

Insbesondere ist dem magnetorheologischen Material ein Weichmacher zugesetzt, der besonders vorteilhaft in einer Menge von mindestens 10 Gew.-%, bevorzugt 30 Gew.-%, bezogen auf das Trägermedium, enthalten ist. Dabei kann der Weichmacher auch bis zu 200 Gew.-% des Trägermediums ausmachen, wodurch äußerst weiche Elastomer- bzw. thermoplastische-Elastomermatrices erhältlich sind. Bevorzugt ist der Weichmacher ausgewählt aus paraffinischem und/oder naphthenischem Öl und/oder Siliconöl.

Eine Rahmenrezeptur des magnetorheologischen Materials wird im Folgenden angegeben. Dabei beträgt
- der Anteil der magnetisierbaren Partikel zwischen 1 und 70 Vol.-%, bevorzugt zwischen 10 und 50 Vol.-%,
- der Anteil des Trägermediums inklusive Weichmacher zwischen 30 und 99 Vol.-%, bevorzugt zwischen 40 und 90 Vol.-%,
- der Anteil der Additive zwischen 0,001 und 20 Massen-%, bevorzugt zwischen 0,01 und 15 Massen-% bezogen auf die magnetisierbaren Feststoffe

Erfindungsgemäß wird ebenso ein Verfahren zur Herstellung eines magnetorheologischen Materials bereitgestellt. Dabei zeichnet sich das Verfahren dadurch aus, dass mindestens ein Vorläufer eines elastomeren Materials und/oder ein thermoplastisch-elastisches Material mindestens mit der ersten und weiteren Sorte magnetisierbarer Partikel vermengt und anschließend durch chemische und/oder physikalische Vernetzung ein Komposit des magnetorheologischen Materials hergestellt wird. Unter Vorläufern von Elastomeren werden dabei beispielsweise Stoffe aus der Gruppe der Polydimethylsiloxane mit Vinylgruppen oder Polyole verstanden, die dann jeweils mit Vernetzungspartnern reagieren.

Bevorzugt kann vor und/oder während der Kompositherstellung ein Magnetfeld angelegt werden, wobei erreicht werden kann, dass eine anisotrope Verteilung der magnetisierbaren Partikel entlang der Feldlinien erhalten wird.

Weiterhin ist bevorzugt, dass beim Vermengen zusätzlich mindestens ein Lösungsmittel ausgewählt aus der Gruppe bestehend aus Toluol, Kohlenwasserstoffe, Aceton zugegeben wird. Das Lösungsmittel wird vorteilhafterweise in einem weiteren Schritt wieder verdampft.

Weiterhin kann beim Vermengen ebenso der Weichmacher zugesetzt werden.

Weiter bevorzugt ist, wenn im Falle von Elastomeren während der Kompositherstellung eine chemische Vernetzung des mindestens einen Trägermediums erfolgt. Dies kann z.B. durch eine Temperatur- oder Wärmebehandlung erfolgen. Ebenso ist auch die alleinige oder zusätzliche Zugabe von Vernetzungschemikalien, z.B. Isocyanaten oder Polysiloxanen mit enthaltenen Si-H-Gruppen zur Vernetzung denkbar.

Bevorzugte Temperaturbereiche bei der Wärmebehandlung liegen dabei zwischen 25 bis 150 °C, bevorzugt zwischen 25 und 100 °C. Diese Temperaturen werden bevorzugt über eine Zeitdauer zwischen 1 s und 10 h gehalten.

Die Vernetzung von thermoplastischen Elastomeren als Trägermedium erfolgt schlicht durch Abkühlung des erhaltenen Komposits, wobei sich die Matrix verfestigt. Insbesondere erfolgt dies bei Temperaturen zwischen 25 und 150 °C, bevorzugt bei 30 bis 100 °C.

Weiterhin ist es auch möglich, dass während und/oder im Anschluss an die Kompositherstellung eine Formgebung, beispielsweise durch Extrudieren, Spritzgießen oder Gießen erfolgt. Somit können die magnetorheologischen Kompositmaterialien in beliebige Form gebracht werden.

Insbesondere ist es bevorzugt, wenn während der Kompositherstellung eine Einstellung des Arbeitspunktes der Steifigkeit des magnetorheologischen Komposits durch Auswahl der Konzentration der mindestens einen ersten Sorte magnetisierbarer Partikel und/oder gegebenenfalls der Auswahl des Mischungsverhältnisses der mindestens einen ersten Sorte magnetisierbarer Partikel und der mindestens einen weiteren Sorte magnetisierbarer Partikel erfolgt.

Es wurde festgestellt, dass bei den erfindungsgemäßen Elastomerkompositen sowohl der Speichermodul (beschreibt das elastische Verhalten bzw. Energiespeicherung) als auch der Verlustmodul (beschreibt das viskose Verhalten bzw. Energiedissipation) durch das Magnetfeld beeinflusst werden. Gleiches gilt auch für den Verlustfaktor als Verhältnis von Verlust- und Speichermodul. Alle diese Eigenschaften werden durch die hartmagnetischen Partikel remanent und durch die weichmagnetischen Partikel reversibel beeinflusst. Damit entstehen technisch bedeutende Möglichkeiten der gesteuerten Schwingungsdämpfung bzw. Schwingungsisolation.

Eine weitere Möglichkeit der erfindungsgemäßen Elastomerkomposite mit Mischungen aus hartmagnetischen und weichmagnetischen Partikeln besteht darin, dass bei einer vorgegebenen Magnetisierung der hartmagnetischen Partikel durch ein vorher angelegtes starkes Magnetfeld die Magnetisierung der weichmagnetischen Partikel durch ein anschließend angelegtes schwächeres Magnetfeld, welches die Magnetisierung der hartmagnetischen Partikel nicht beeinflusst, je nach Richtung des schwächeren Magnetfeldes die ursprüngliche Magnetisierung des Komposits entweder verstärkt oder schwächt. Dementsprechend können auch die mechanischen Eigenschaften des erfindungsgemäßen Elastomerkomposite mit hartmagnetischen und weichmagnetischen Partikeln, wie E-Modul oder Schubmodul, abhängig von der Feldrichtung entweder erhöht oder verringert werden. Durch die Vormagnetisierung kann eine erhöhte Grundsteifigkeit des Elastomerkomposits eingestellt werden. Das anschließend angelegte schwächere Magnetfeld kann je nach Richtung das durch die hartmagnetischen Partikel erzeugte Magnetfeld entweder verstärken oder schwächen und damit die Steifigkeit des Elastomerkomposites (E-Modul bzw. Schubmodul) entweder erhöhen oder verringern. Mit der Vormagnetisierung kann beispielsweise der Arbeitspunkt der Steifigkeit in einem schwingungsmindernden System festgelegt werden.

Eine zusätzliche Eigenschaft des magnetorheologischen Elastomerkomposits besteht im Auftreten eines Formgedächtniseffektes. Im versteiften Zustand des Komposits kann ein aus dem Kompositmaterial abgeformter Gegenstand durch Einwirken von äußeren Kräften verformt werden. Der versteifte Zustand kann entweder durch eine remanente Magnetisierung von hartmagnetischen Partikeln oder durch eine Mischung von hartmagnetischen und weichmagnetischen Partikeln in der Elastomermatrix erreicht werden. Nach der Entmagnetisierung geht der Gegenstand in seine ursprüngliche Form zurück. Dieser Effekt lässt sich darauf zurückführen, dass im magnetisierten Zustand die magnetischen Kräfte zwischen den Teilchen dominieren, während das Verhalten ohne Magnetisierung durch die elastischen Kräfte des Elastomers bestimmt wird. Eine Voraussetzung hierfür besteht darin, dass die elastischen Kräfte nicht zu stark sind. Eine weiche Elastomermatrix ist daher besonders vorteilhaft. Das beschriebene Verhalten kann für Sicherheitssysteme oder künstliche Muskeln genutzt werden.

Aus der Vielseitigkeit der erfindungsgemäßen magnetorheologischen Elastomerkomposite ergeben sich weitrechende Anwendungsmöglichkeiten. Beispielhaft seien hierzu folgende Anwendungsmöglichkeiten stichpunktartig aufgeführt:
- in adaptiven Stoß- und Schwingungsdämpfern, Schwingungsisolatoren, steuerbaren Bremsen, Kupplungen, Aktoren, Sicherheitsschaltern, haptischen Systemen, künstlichen Muskeln sowie in Sport- oder Trainingsgeräten,
- zur Oberflächenbearbeitung von Werkstücken,
- zur Erzeugung und/oder Darstellung haptischer Informationen wie Schriftzeichen, computersimulierte Objekte, Sensorsignale oder Bilder; zur Simulation von viskosen, elastischen und/oder visko-elastischen Eigenschaften bzw. der Konsistenzverteilung eines Objekts, insbesondere zu Trainings- und/oder Forschungszwecken und/oder für medizinische Anwendungen,
- als magnetisch steuerbare Elastomerkomposite zusammen mit einem Magnetkreis, der Elektromagnete und Permanentmagnete zur Einstellung des Arbeitspunktes der Steifigkeit enthält.

### Ausführungsbeispiel 1 (nicht erfindungsgemäβ):

Magnetorheologisches Elastomer, bestehend aus thermoplastischem Elastomer, 90 % Weichmacher, bezogen auf das thermoplastische Elastomer, und 30 Vol.-% hartmagnetischen Partikeln

12 g Granulat (Styrol-Ethylen-Propylen-Block-Copolymer, Dichte 0,89 g/cm³, HTP 8534/11, Thermolast K, Kraiburg TPE GmbH) werden mit 10,8 g Paraffin dünnflüssig Ph Eur, BP, NF (Dichte 0,85 g/cm³, Merck) und mit 83,057 g Hartmagnetpulver MQP-S-119 (Dichte 7,4 g/cm³, Magnequench, mittlere Partikelgröße 45 µm) in ein Becherglas gegeben und mit einem Spatel vermischt. Anschließend werden 26 g Toluol hinzugegeben und vermischt. Die Mischung wird in einem Ofen auf 90 °C erhitzt und alle 5-10 Minuten gründlich umgerührt, wodurch das Auflösen des Polymers beschleunigt und das Ausdampfen des Toluols gefördert wird. Nach dem Verdicken der Masse wird diese alle 15 Minuten umgerührt, bis das Toluol vollständig verdampft ist. Die Mischung wird anschließend mit einem Spritzgießwerkzeug verarbeitet. Auf diese Weise werden plattenförmige Proben mit einer Dicke von 1 mm hergestellt.

### Ausführungsbeispiel 2:

Magnetorheologisches Elastomer, bestehend aus thermoplastischem Elastomer, 90 % Weichmacher, bezogen auf das thermoplastische Elastomer, und 10 Vol.-% hartmagnetischen Partikeln sowie 20 Vol.-% weichmagnetischen Partikeln

12 g Granulat (Styrol-Ethylen-Propylen-Block-Copolymer, Dichte 0,89 g/cm³, HTP 8534/11, Thermolast K, Kraiburg TPE GmbH) werden mit 10,8 g Paraffin dünnflüssig Ph Eur, BP, NF (Dichte 0,85 g/cm³, Merck), mit 27,685 g Hartmagnetpulver MQP-S-119 (Dichte 7,4 g/cm³, mittlere Partikelgröße 45 µm, Magnequench) und mit 58,491 g Weichmagnetpulver (Carbonyleisen SQ, Dichte 7,817 g/cm³, mittlere Partikelgröße 5 µm, BASF) in ein Becherglas gegeben und mit einem Spatel vermischt. Anschließend werden 26 g Toluol hinzugegeben und vermischt. Die Mischung wird in einem Ofen auf 90 °C erhitzt und alle 5-10 Minuten gründlich umgerührt, wodurch das Auflösen des Polymers beschleunigt und das Ausdampfen des Toluols gefördert wird. Nach dem Verdicken der Masse wird diese alle 15 Minuten umgerührt, bis das Toluol vollständig verdampft ist. Die Mischung wird anschließend mit einem Spritzgießwerkzeug verarbeitet. Auf diese Weise werden plattenförmige Proben mit einer Dicke von 1 mm hergestellt.

## Patentansprüche

1. Magnetorheologische Materialien aus mindestens einem nicht-magnetisierbaren elastomeren und/oder thermoplastisch-elastischen Trägermedium und darin enthaltend magnetisierbare Partikel, **dadurch gekennzeichnet, dass** mindestens eine erste Sorte magnetisierbarer Partikel aus mindestens einem hartmagnetischen Werkstoff und mindestens eine weitere Sorte magnetisierbarer Partikel aus mindestens einem weichmagnetischem Werkstoff enthalten sind.

2. Magnetorheologische Materialien nach Anspruch 1, **dadurch gekennzeichnet, dass** die Remanenz Bᵣ des mindestens einen hartmagnetischen Werkstoffs mindestens 50 mT, bevorzugt mindestens 150 mT, besonders bevorzugt mindestens 350 mT beträgt.

3. Magnetorheologische Materialien nach einem der vorhergehenden Ansprüche, **dadurch gekennzeichnet, dass** mindestens ein hartmagnetischer Werkstoff ausgewählt ist aus der Gruppe bestehend aus Legierungen basierend auf Al-Ni-Co, Al-Ni-Co-Fe-Ti, Cr-Fe-Co, Fe-Co-V-Cr, Pt-Co, Cu-Ni-Fe, Seltenerdverbindungen wie RE-Co, RE-Fe-B, RE-Fe-N, wobei RE = Sm, Ce, Pr, Nd und/oder Dy ist, z.B. Nd-Fe-B, Nd-Pr-Fe-Co-Ti-Zr-B, Pr-Fe-Co-Nd-B, Sm-Fe-N; Hartferriten, bevorzugt gemäß der Formel M¹O·n Fe₂O₃, wobei M¹ = Ba, Sr und/oder Pb und bevorzugt 4,5 ≤ n ≤ 6,5 sowie Mischungen und/oder Legierungen hieraus.

4. Magnetorheologische Materialien nach einem der vorhergehenden Ansprüche, **dadurch gekennzeichnet, dass** mindestens eine weitere Sorte magnetisierbarer Partikel enthalten ist.

5. Magnetorheologische Materialien nach einem der vorhergehenden Ansprüche, **dadurch gekennzeichnet, dass** mindestens ein weichmagnetischer Werkstoff ausgewählt ist aus der Gruppe bestehend aus
a) Eisen, Cobalt, Nickel (auch in nichtreiner Form) und Legierungen daraus, wie Eisen-Cobalt, Eisen-Nickel; magnetischer Stahl; Eisen-Silizium und/oder deren Mischungen;
b) weichmagnetischen oxidkeramischen Werkstoffen, insbesondere aus kubischen Ferriten, Perowskiten und Granaten der allgemeinen Formel
M²O · Fe₂O₃
mit einem oder mehreren Metallen aus der Gruppe M² = Mn, Fe, Co, Ni, Cu, Zn, Ti, Cd oder Mg und/oder deren Mischungen,
c) Mischferriten, wie Mn-Zn-, Ni-Zn-, Ni-Co-, Ni-Cu-Co-, Ni-Mg-, Cu-Mg-Ferriten und/oder deren Mischungen, und/oder
d) Eisencarbid oder Eisennitrid sowie aus Legierungen von Vanadium, Wolfram, Kupfer und Mangan und/oder deren Mischungen.

6. Magnetorheologische Materialien nach einem der vorhergehenden Ansprüche, **dadurch gekennzeichnet, dass** die mittlere Teilchengröße der magnetisierbaren Partikel zwischen 5 nm und 10 mm, bevorzugt zwischen 10 nm und 1 mm liegt.

7. Magnetorheologische Materialien nach einem der vorhergehenden Ansprüche, **dadurch gekennzeichnet, dass** die erste Sorte magnetisierbarer Partikel und/oder die mindestens eine weitere Sorte magnetisierbarer Partikel als Mischungen von Partikeln mit verschiedener Partikelgröße vorliegen, insbesondere, dass die Mischung eine bioder trimodale Partikelgrößenverteilung ist.

8. Magnetorheologische Materialien nach einem der vorhergehenden Ansprüche, **dadurch gekennzeichnet, dass** das mindestens eine Trägermedium
a) einen Schubmodul < 500 kPa, bevorzugt < 250 kPa, besonders bevorzugt < 100 kPa gemessen bei 10 Hz und einer Deformation von 1 %,
b) eine Shorehärte A < 20, bevorzugt < 10, und/oder
c) einen E-Modul < 1500 kPa, bevorzugt < 750 kPa, besonders bevorzugt < 300 kPa aufweist.

9. Magnetorheologische Materialien nach einem der vorhergehenden Ansprüche, **dadurch gekennzeichnet, dass** sie bezogen auf das Trägermedium mindestens 10 Gew.-%, bevorzugt 30 bis 200 Gew.-% Weichmacher enthalten.

10. Verfahren zur Herstellung von magnetorheologischen Materialien nach einem der vorhergehenden Ansprüche, **dadurch gekennzeichnet, dass** mindestens ein Vorläufer eines elastomeren Materials und/oder ein thermoplastisch-elastisches Material mindestens mit der ersten und weiteren Sorte magnetisierbarer Partikel vermengt und anschließend durch chemische und/oder physikalische Vernetzung ein Komposit des magnetorheologischen Materials hergestellt wird.

11. Verfahren nach vorhergehendem Anspruch, **dadurch gekennzeichnet, dass** vor und/oder während der Kompositherstellung ein Magnetfeld angelegt wird.

12. Verfahren.nach einem der Ansprüche 10 oder 11, **dadurch gekennzeichnet, dass** beim Vermengen zusätzlich mindestens ein Lösungsmittel ausgewählt aus der Gruppe bestehend aus Toluol, Kohlenwasserstoffe, Aceton zugegeben wird.

13. Verfahren nach einem der Ansprüche 10 bis 12, **dadurch gekennzeichnet, dass** beim Vermengen zusätzlich der mindestens eine Weichmacher zugesetzt wird.

14. Verfahren nach einem der Ansprüche 10 bis 13, **dadurch gekennzeichnet, dass**
a) die chemische Vernetzung durch Temperaturerhöhung auf Temperaturen im Bereich von 25 bis 150 °C, bevorzugt im Bereich von 25 bis 100 °C erfolgt, und/oder
b) die physikalische Vernetzung durch Temperaturerniedrigung auf Temperaturen im Bereich von 25 bis 150 °C, bevorzugt im Bereich von 30 bis 100 °C erfolgt.

15. Verwendung der magnetorheologische Materialien nach einem oder mehreren der Ansprüche 1 bis 9 in adaptiven Stoß- und Schwingungsdämpfern, Schwingungsisolatoren, steuerbaren Bremsen, Kupplungen, Aktoren, Sicherheitsschaltern, haptischen Systemen, künstlichen Muskeln sowie in Sport- oder Trainingsgeräten, zur Oberflächenbearbeitung von Werkstücken, zur Erzeugung und/oder Darstellung haptischer Informationen wie Schriftzeichen, computersimulierte Objekte, Sensorsignale oder Bilder; zur Simulation von viskosen, elastischen und/oder visko-elastischen Eigenschaften bzw. der Konsistenzverteilung eines Objekts, insbesondere zu Trainings- und/oder Forschungszwecken und/oder für medizinische Anwendungen und/oder als magnetisch steuerbare Elastomerkomposite zusammen mit einem Magnetkreis, der Elektromagnete und Permanentmagnete zur Einstellung des Arbeitspunktes der Steifigkeit enthält.

## Claims

1. Magnetorheological materials, comprising at least one non-magnetisable elastomeric and/or thermoplastic-elastic carrier medium and magnetisable particles contained therein, **characterised in that** at least one first sort of magnetisable particles made of at least one hard magnetic material and at least one further sort of magnetisable particles made of at least one soft magnetic material are contained.

2. Magnetorheological materials according to claim 1, **characterised in that** the remanence Bᵣ of the at least one hard magnetic material is at least 50 mT, preferably at least 150 mT, particularly preferred at least 350 mT.

3. Magnetorheological materials according to one of the preceding claims, **characterised in that** at least one hard magnetic material is selected from the group comprising alloys based on Al-Ni-Co, Al-Ni-Co-Fe-Ti, Cr-Fe-Co, Fe-Co-V-Cr, Pt-Co, Cu-Ni-Fe, rare-earth compounds, such as RE-Co, RE-Fe-B, RE-Fe-N, RE = Sm, Ce, Pr, Nd and/or Dy, e.g. Nd-Fe-B, Nd-Pr-Fe-Co-Ti-Zr-B, Pr-Fe-Co-Nd-B, Sm-Fe-N; hard ferrites, preferably according to the formula M¹O.nFe₂O₃, M¹ = Ba, Sr and/or Pb and preferably 4.5 ≤ n ≤ 6.5 and also mixtures and/or alloys hereof.

4. Magnetorheological materials according to one of the preceding claims, **characterised in that** at least one further sort of magnetisable particles is contained.

5. Magnetorheological materials according to one of the claims 1 to 4, **characterised in that** at least one soft magnetic material is selected from the group comprising
a) iron, cobalt, nickel (also in an impure form) and alloys thereof, such as iron-cobalt, iron-nickel; magnetic steel; iron-silicon and/or mixtures thereof,
b) soft magnetic oxide-ceramic materials, in particular from cubic ferrites, perovskites and garnets of the general formula
M²O.Fe₂O₃
having one or more metals from the group M² = Mn, Fe, Co, Ni, Cu, Zn, Ti, Cd or Mg and/or mixtures thereof,
c) mixed ferrites, such as Mn-Zn-, Ni-Zn-, Ni-Co-, Ni-Cu-Co-, Ni-Mg-, Cu-Mg ferrites and/or mixtures thereof, and/or
d) iron carbide or iron nitride, and also from alloys of vanadium, tungsten, copper and manganese and/or mixtures thereof.

6. Magnetorheological materials according to one of the preceding claims, **characterised in that** the average particle size of the magnetisable particles is between 5 nm and 10 mm, preferably between 10 nm and 1 mm.

7. Magnetorheological materials according to one of the preceding claims, **characterised in that** the first sort of magnetisable particles and/or the at least one further sort of magnetisable particles are present as mixtures of particles with a different particle size, especially **in that** mixture is a bi- or trimodal particle size distribution.

8. Magnetorheological materials according to one of the preceding claims, **characterised in that** the at least one carrier medium
a) has a shear modulus < 500 kPa, preferably < 250 kPa, particularly preferred < 100 kPa, measured at 10 Hz and a deformation of 1%,
b) has a Shore hardness A < 20, preferably < 10, and/or
c) has a modulus of elasticity < 1500 kPa, preferably < 750 kPa, particularly preferred < 300 kPa.

9. Magnetorheological materials according to one of the preceding claims, **characterised in that** they contain at least 10% by weight, preferably 30 to 200% by weight, plasticisers, relative to the carrier medium.

10. Method for producing magnetorheological materials according to one of the preceding claims, **characterised in that** at least one precursor of an elastomeric material and/or a thermoplastic-elastic material is mixed at least with the first and further sort of magnetisable particles and subsequently a composite of the magnetorheological material is produced by chemical and/or physical crosslinking.

11. Method according to the preceding claim, **characterised in that** a magnetic field is applied before and/or during the composite production.

12. Method according to one of the claims 10 or 11, **characterised in that** in addition at least one solvent selected from the group comprising toluene, hydrocarbons, acetone is added during mixing.

13. Method according to one of the claims 10 to 12, **characterised in that** in addition the at least one plasticiser is added during mixing.

14. Method according to one of the claims 10 to 13, **characterised in that**
a) the chemical crosslinking is effected by temperature increase to temperatures in the range of 25 to 150°C, preferably in the range of 25 to 100°C, and/or
b) the physical crosslinking is effected by temperature reduction to temperatures in the range of 25 to 150°C, preferably in the range of 30 to 100°C.

15. Use of the magnetorheological materials according to one or more of the claims 1 to 9 in adaptive impact and vibration dampers, vibration insulators, controllable brakes, clutches, actuators, safety switches, haptic systems, artificial muscles and also in sports or training apparatus, and/or for surface machining of workpieces, and/or for producing and/or displaying haptic information, such as characters, computer-simulated objects, sensor signals or pictures; for simulating viscous, elastic and/or viscoelastic properties or for consistency distribution of an object, in particular for training and/or research purposes and/or for medical applications, and/or as magnetically controllable elastomer composites together with a magnetic circuit, which contains electromagnets and permanent magnets for setting the operating point of the rigidity.

## Revendications

1. Matériaux magnéto-rhéologiques constitués d'au moins un milieu de support élastomère et/ou thermoplastique-élastique non magnétisable et de particules magnétisables qui y sont contenues, **caractérisés en ce qu'**au moins une première sorte de particules magnétisables constituées d'au moins un matériau magnétique dur et au moins une autre sorte de particules magnétisables constituées d'au moins un matériau magnétique doux y sont contenues.

2. Matériaux magnéto-rhéologiques selon la revendication 1, **caractérisés en ce que** la rémanence Bᵣ du au moins un matériau magnétique dur est d'au moins 50 mT, de préférence d'au moins 150 mT, de toute préférence d'au moins 350 mT.

3. Matériaux magnéto-rhéologiques selon l'une quelconque des revendications précédentes, **caractérisés en ce qu'**au moins un matériau magnétique dur est choisi dans le groupe constitué d'alliages à base de Al-Ni-Co, Al-Ni-Co-Fe-Ti, Cr-Fe-Co, Fe-Co-V-Cr, Pt-Co, Cu-Ni-Fe, de composés de terres rares tels que RE-Co, RE-Fe-B, RE-Fe-N, dans lesquels RE est = à Sm, Ce, Pr, Nd et/ou Dy, par exemple, Nd-Fe-B, Nd-Pr-Fe-Co-Ti-Zr-B, Pr-Fe-Co-Nd-B, Sm-Fe-N , de ferrites dures, de préférence répondant à la formule M¹O·n Fe₂O₃, où M¹ = Ba, Sr et/ou Pb et où, de préférence, 4,5 < n < 6,5, ainsi que des mélanges et/ou d'alliages de ceux-ci.

4. Matériaux magnéto-rhéologiques selon l'une quelconque des revendications précédentes, **caractérisés en ce qu'**au moins une autre sorte de particules magnétisables y est contenue.

5. Matériaux magnéto-rhéologiques selon l'une quelconque des revendications précédentes, **caractérisés en ce qu'**au moins un matériau magnétique doux est choisi dans le groupe constitué de :
a) fer, cobalt, nickel (également à l'état non pur) et de leurs alliages tels que le fer-cobalt, le fer-nickel ; acier magnétique ; fer-silicium et/ou de leurs mélanges ;
b) matériaux céramiques oxydés magnétiques doux, en particulier constitués de ferrites cubiques, de pérovskites et de grenats répondant à la formule générale
M²O.Fe₂O₃
avec un ou plusieurs métaux du groupe M² = Mn, Fe, Co, Ni, Cu, Zn, Ti, Cd ou Mg et/ou leurs mélanges,
c) ferrites mixtes, telles que Mn-Zn-, Ni-Zn-, Ni-Co-, Ni-Cu-Co-, Ni-Mg, Cu-Mg-ferrites et/ou leurs mélanges, et/ou
d) carbure de fer ou nitrure de fer, ainsi que d'alliages de vanadium, de tungstène, de cuivre et de manganèse et/ou de leurs mélanges.

6. Matériaux magnéto-rhéologiques selon l'une quelconque des revendications précédentes, **caractérisés en ce que** la taille particulaire moyenne des particules magnétisables se situe entre 5 nm et 10 mm, de préférence, entre 10 nm et 1 mm.

7. Matériaux magnéto-rhéologiques selon l'une quelconque des revendications précédentes, **caractérisés en ce que** la première sorte de particules magnétisables et/ou la au moins une autre sorte de particules magnétisables se présentent sous la forme de mélanges de particules avec des tailles particulaires différentes, en particulier **en ce que** le mélange représente une distribution bi- ou trimodale de tailles particulaires.

8. Matériaux magnéto-rhéologiques selon l'une quelconque des revendications précédentes, **caractérisés en ce que** le au moins un milieu de support présente :
a) un module de cisaillement < 500 kPa, de préférence < 250 kPa, de toute préférence < 100 kPa mesurés à 10 Hz et à une déformation de 1 %,
b) une dureté Shore A < 20, de préférence < 10, et/ou
c) un module d'élasticité E < 1500 kPa, de préférence < 750 kPa, de toute préférence < 300 kPa.

9. Matériaux magnéto-rhéologiques selon l'une quelconque des revendications précédentes, **caractérisés en ce qu'**ils contiennent au moins 10 % en poids, de préférence 30 à 200 % en poids de plastifiants rapporté au médium de support,

10. Procédé pour la fabrication de matériaux magnéto-rhéologiques selon l'une quelconque des revendications précédentes, **caractérisé en ce qu'**au moins un précurseur d'un matériau élastomère et/ou un matériau thermoplastique-élastique est ou sont mélangé(s), au moins, à la première et à l'autre sorte de particules magnétisables et **en ce qu'**ensuite, un composite du matériau magnéto-rhéologique est fabriqué par réticulation chimique et/ou physique.

11. Procédé selon la revendication précédente, **caractérisé en ce qu'**avant et/ou pendant la fabrication du composite, un champ magnétique est établi.

12. Procédé selon l'une quelconque des revendications 10 ou 11, **caractérisé en ce que** lors du mélange, au moins un solvant est ajouté en plus, qui est choisi dans le groupe constitué du toluène, d'hydrocarbures et de l'acétone.

13. Procédé selon l'une quelconque des revendications 10 à 12, **caractérisé en ce que** lors du mélange, le au moins un plastifiant est ajouté en plus.

14. Procédé selon l'une quelconque des revendications 10 à 13, **caractérisé en ce que**
a) la réticulation chimique est effectuée par augmentation de la température à des niveaux situés dans la plage de 25 à 150 °C, de préférence dans la plage de 25 à 100 °C, et/ou
b) la réticulation physique est effectuée par diminution de la température à des niveaux situés dans la plage de 25 à 150 °C, de préférence dans la plage de 30 à 100 °C.

15. Utilisation des matériaux magnéto-rhéologiques selon une ou plusieurs des revendications 1 à 9, dans des amortisseurs de chocs et de vibrations adaptatifs, des isolateurs de vibrations, des freins pilotables, des accouplements, des actionneurs, des interrupteurs de sécurité, des systèmes haptiques, des muscles artificiels ainsi que dans des appareils de sport ou d'entraînement, pour le traitement de surface de pièces d'usinage, pour la production et/ou la représentation d'informations haptiques telles que des caractères, des objets simulés par ordinateur, des signaux de capteurs ou des images, pour la simulation de propriétés visqueuses, élastiques et/ou viscoélastiques ou la distribution de la cohérence d'un objet, en particulier à des fins d'entraînement et/ou de recherche et/ou pour applications médicales et/ou comme composites élastomères pilotables par système magnétique conjointement avec un circuit magnétique, qui contient des électroaimants et des aimants permanents pour régler le point de fonctionnement de la rigidité.
